# EUROPEAN PATENT SPECIFICATION

(11) **EP 4 159 096 B1**
(45) Date of publication and mention of the grant of the patent: **02.07.2025**
(21) Application number: 21814623.1
(22) Date of filing: 28.05.2021
(51) Int. Cl.: F24C 15/00, F24C 15/04

(54) **HOUSEHOLD APPLIANCE**
HAUSHALTSGERÄT
APPAREIL ÉLECTROMÉNAGER

(30) Priority: 29.05.2020 CN 202010478158
(43) Date of publication of application: 05.04.2023
(73) Proprietor: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: RAO, Bowen, Foshan, Guangdong 528311 (CN); ZHANG, Jianlong, Foshan, Guangdong 528311 (CN); ZHANG, Zhenbao, Foshan, Guangdong 528311 (CN)
(74) Representative: RGTH
(86) International application number: PCT/CN2021/096805
(87) International publication number: WO 2021/239119

(56) References cited:
- WO-A1-2018/140954
- WO-A1-2019/218685
- CN-A- 103 705 137
- CN-A- 107 692 861
- CN-A- 109 330 398
- CN-A- 109 717 761
- CN-A- 110 731 704
- CN-A- 111 035 276
- CN-A- 111 035 276
- CN-A- 111 096 681
- CN-A- 111 588 280
- CN-A- 111 608 546
- CN-B- 101 435 601
- CN-U- 209 863 488
- JP-A- H10 192 155
- US-A1- 2017 261 213
- US-A1- 2018 292 092

## Description

### FIELD

The present disclosure relates to the field of appliance technologies, and more particularly, to a household appliance.

### BACKGROUND

In the related art, in order to increase a degree of intelligence of an oven, the oven is provided with a camera to realize food material identification in a chamber and cooking degree identification of food during the cooking. However, the camera has a specific requirement for operating environment temperature. When the oven is in operation, a large amount of heat is transferred to the camera at a mounting position thereof through a door body glass. As a result, a higher operating environment temperature would affect performance and service life of the camera. CN 111035276 B discloses an oven door assembly for an embedded oven, wherein the oven door assembly comprises a door body comprising a first door plate and a second door plate, a cooling air duct arranged between the first door plate and the second door plate, an air channel inlet being formed in the bottom of the door body, and an air channel outlet being formed in the top of the door body and a fan being arranged in the cooling air duct. CN 209863488 U discloses an oven comprises a box body, a door body and a camera module. Furthermore, CN 101435601 B discloses an oven body and an oven door, wherein the oven body and the oven door are connected together to form a sealed cooking cavity, an image pickup hole which is communicated with the cooking cavity is arranged on the oven body or the oven door, and the inside of the image pickup hole is provided with a camera. In addition, WO 2019/218685 A1 discloses a smart microwave oven having a food material collection function comprising a casing, an infrared temperature sensor, wherein the infrared temperature sensor is mounted at a middle position of a top wall of an accommodating cavity and is used for measuring the surface temperature of food material at the interior of the accommodating cavity.

### SUMMARY

The present invention relates to a household appliance, wherein said household appliance comprises a chamber, a camera, a door body, and a heat dissipate device. The door body is movably connected to a front part of the chamber. A first air duct is defined in the door body, and the camera is located in the first air duct. The heat dissipation device is mounted in the door body and supplies air into the first air duct to dissipate heat for the door body and the camera.

In the household appliance as described above, air is supplied into the first air duct through the heat dissipation device to dissipate heat for the camera and the door body. Thus, it is possible to effectively cool the camera and the door body, and thus requirements for an operating environment temperature of the camera and temperature requirements of the door body can be satisfied.

In some embodiments, the heat dissipation device is located at a lower part of the door body. The camera is located above the heat dissipation device.

In some embodiments, a first glass plate is disposed on an inner side of the door body. The first glass plate isolates the camera in the first air duct from the air in the chamber when the chamber is closed by the door body.

In some embodiments, a second glass plate is disposed on an outer side of the door body. The first glass plate and the second glass plate are spaced apart from each other on the door body to form the first air duct.

According to the invention, the heat dissipation device comprises a first bracket and a first fan. The first bracket comprises a first air duct member. An air outlet is defined in the first air duct member, and an air outlet grid is disposed at the air outlet. The first fan is mounted on the door body by means of the first bracket.

In some embodiments, the air outlet grid directs an air supply direction of the heat dissipation device towards the camera.

In some embodiments, a plurality of first fans is provided and arranged in parallel along a lower part of the door body.

In some embodiments, the first fan comprises a centrifugal fan.

According to the invention, two first fans are provided. The first air duct member has a first ventilation passage, a second ventilation passage, and a connecting ventilation passage. The connecting ventilation passage is in communication with the first ventilation passage, the second ventilation passage, and the air outlet. One of the two first fans is in communication with the first ventilation passage, and another one of the two first fans is in communication with the second ventilation passage. The first ventilation passage is obliquely communicated with the connecting ventilation passage, and the second ventilation passage is horizontally communicated with the connecting ventilation passage.

In some embodiments, a side wall of the connecting ventilation passage away from the air outlet is formed as a flow guide wall.

In some embodiments, a side wall of the connecting ventilation passage away from the air outlet has a shape recessed towards the air outlet grid.

In some embodiments, the household appliance further comprises a second bracket. The camera is mounted in the first air duct by means of the second bracket. The second bracket has an accommodation space. The camera is located in the accommodation space, and the accommodation space has an opening facing towards the heat dissipation device.

In some embodiments, the second bracket has a light blocking member disposed at a front part of the camera.

In some embodiments, the second bracket has a plurality of exhaust holes arranged upwards at different positions on the second bracket. Each of the plurality of exhaust holes is in communication with the accommodation space.

In some embodiments, a control box is fixed to the front part of the chamber and located above the door body. The household appliance further comprises a second air duct member disposed at a top of the chamber. A second fan is disposed in the second air duct member, and the second air duct member has a second air duct. The second air duct has an inlet in communication with the first air duct and an outlet in communication with a gap between the top of the door body and the control box.

In some embodiments, the control box has a touch screen. An operation of the household appliance is controllable through manipulating the touch screen.

In some embodiments, the household appliance further comprises a deflector corresponding to the outlet of the second air duct. The deflector is mounted at a bottom of the control box.

In some embodiments, the deflector comprises a first deflecting member and a second deflecting member. The first deflecting member and the second deflecting member are spaced apart from each other at the outlet of the second air duct to form an air outlet channel.

In some embodiments, the air outlet channel has a central axis inclined upwards from a horizontal direction by a predetermined angle.

In some embodiments, the household appliance comprises an oven.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments in conjunction with the accompanying drawings, in which:
FIG. 1 is a schematic structural view of a household appliance according to an embodiment of the present invention;
FIG. 2 is a schematic view of an internal structure of a door body according to an embodiment of the present invention;
FIG. 3 is a schematic cross-sectional view of a door body according to an embodiment of the present invention;
FIG. 4 is a perspective view of a door body according to an embodiment of the present invention;
FIG. 5 is a schematic front view of a household appliance according to an embodiment of the present invention
FIG. 6 is a schematic cross-sectional view of a household appliance according to an embodiment of the present invention; disclosure; and
FIG. 7 is an enlarged view of a part X of FIG. 6.

### Reference Numerals of main components:

household appliance 100;
chamber 11, camera 13, first glass plate 131, second glass plate 132, first air outlet 133, first air inlet 134, door body 15, first air duct 17;
heat dissipation device 21, first fan 23, first intake 231, first exhaust port 233, first bracket 25;
first air duct member 31, air outlet 311, air outlet grid 312, first ventilation passage 33, second ventilation passage 35, connecting ventilation passage 37, flow guide wall 39;
second bracket 41, accommodation space 43, opening 45, exhaust hole 47;
control box 51, second air duct member 53, communication space 531, second fan 55, second air duct 57, inlet 571, outlet 573, gap 574, upper air duct 575, lower air duct 577, touch screen 59;
deflector 61, first deflecting member 63, second deflecting member 65, air outlet channel 67.

### DETAILED DESCRIPTION OF THE EMBODIMENTS

Embodiments of the present invention will be described below in detail, examples of the embodiments are shown in accompanying drawings, and throughout the description, the same or similar reference numerals represent the same or similar components or the components having the same or similar functions. The embodiments described below with reference to the accompanying drawings are exemplary and merely used to explain the present invention, rather than being construed as limitation on the present invention.

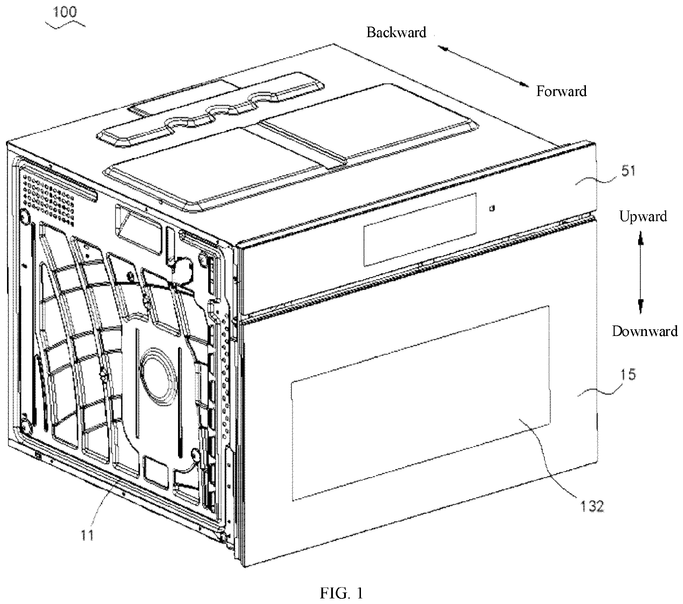

Referring to FIG. 1 to FIG. 3, an embodiment of the present invention provides a household appliance 100. The household appliance 100 comprises a chamber 11, a camera 13, a door body 15, and a heat dissipation device 21. The door body 15 is movably connected to a front portion of the chamber 11. A first air duct 17 is disposed in the door body 15. The camera 13 is located in the first air duct 17. The heat dissipation device 21 is mounted on the door body 15 and configured to supply air into the first air duct 17 to dissipate heat for the door body 15 and the camera 13.

In the household appliance 100 as described above, the air can be supplied into the first air duct 17 through the heat dissipation device 21 to dissipate heat for the camera 13 and the door body 15, it is thus possible to effectively cool the camera 13 and the door body 15. As a result, requirements for an operating environment temperature of the camera 13 and temperature requirements of the door body 15 can be satisfied.

In some embodiments, for a household appliance 100 having an intelligent function, specific state information is required to be obtained by collecting image information of materials (such as food). In one embodiment, the household appliance 100 is an oven. When the food is cooked by the oven, the image information of the food may be collected and recognized by the camera 13 to determine whether cooking conditions are satisfied for the food. In another embodiment, the household appliance 100 is a microwave oven. When the food is cooked by the microwave oven, the image information of the food may be collected and recognized by the camera 13 to determine whether the cooking conditions are satisfied for the food. The household appliance 100 may also be an electric rice cooker, an induction cooker, a steam cooker, a refrigerator, a dishwasher, or the like, which is not limited herein.

The following embodiments will be described by taking the oven as the household appliance 100.

In some embodiments, the oven may generate a large amount of heat when cooking the food. When the chamber 11 is closed by the door body 15, the heat is gradually transferred to the door body 15, which rises a temperature around the camera 13. In one example, the chamber has a maximum operating temperature of 250°C, and a maximum operating environment temperature acceptable by the camera 13 is 60°C. In this case, an extremely high operating temperature would cause the operating environment temperature of the camera 13 to exceed an acceptable range, which would affect operating performance and service life of the camera 13.

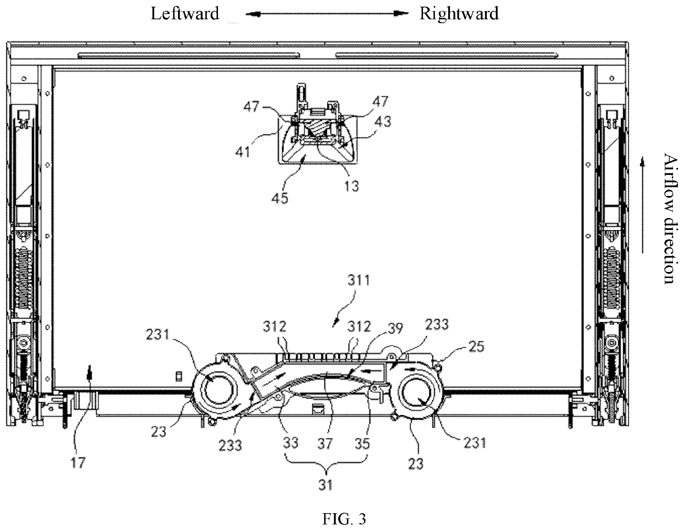

In connection with FIG. 3, in the embodiment illustrated in FIG. 3, the heat dissipation device 21 sucks external air into the first air duct 17 to allow the air to directly flow to the camera 13 along the first air duct 17. Since air for heat dissipation is directly obtained at the camera 13, cold air may also enter the first air duct 17 from a lower part of the door body 15 to dissipate the heat around the camera 13. As a result, a temperature of the camera 13 can be generally kept within a normal operating temperature range. Thus, it is possible to ensure that the camera 13 is not affected by a high temperature to avoid degradation of the operating performance and the service life of the camera 13. In one example, the heat dissipation device 21 may reduce the operating environment temperature of the camera 13 to 58°C. In addition, in this embodiment, the heat dissipation device 21 is mounted inside the door body 15 (for example, mounted at a position in the first air duct 17 close to a bottom the door body 15). In other embodiments, the heat dissipation device 21 may be mounted elsewhere in the door body 15. For example, the heat dissipation device 21 is mounted at the bottom of the door body 15 to ensure that the heat dissipation device 21 can supply the air into the first air duct 17.

Further, the heat dissipation around the camera 13 can be accelerated by adjusting a volume of supplied air from the heat dissipation device 21. In this case, the camera 13 may be disposed at a position in the door body 15 close to the chamber 11. As a result, no protrusion for mounting the camera 13 is required to be provided on an outer surface of the door body 15 to maintain a large distance between the camera 13 and the chamber 11, which may avoid potential risks (for example, the user is injured during the using) as well as aesthetics from being affected. In one embodiment, the door body 15 is designed without a handle, which provides a flat appearance for the door body 15.

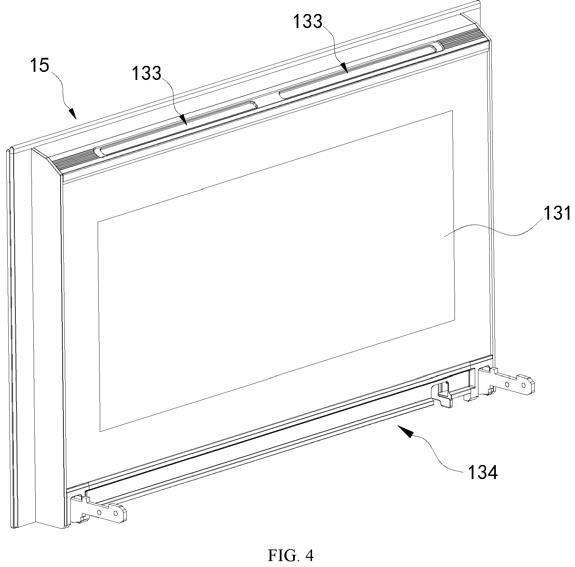

In addition, in connection with FIG. 4 again, in the embodiment illustrated in FIG. 4, a first glass plate 131 is disposed on an inner side of the door body 15. In the case where the chamber 11 is closed by the door body 15, the first glass plate 131 is capable of isolating the camera 13 in the first air duct 17 from the air in the chamber 11. The camera 13 can collect an image of the food in the chamber 11 through the first glass plate 131. In one embodiment, the first glass plate 131 is a heat insulation glass to decelerate a speed at which the heat in the chamber 11 is transferred to the camera 13. Referring again to FIG. 1, a second glass plate 132 is disposed on an outer side of the door body 15. The first glass plate 131 and the second glass plate 132 are spaced apart from each other on the door body 15 to form the first air duct 17. In this way, a temperature rise of the second glass plate 132 can also satisfy safety requirements.

In addition, in other embodiments, the camera 13 may be a heat resisting camera 13 to improve the maximum operating environment temperature acceptable by the camera 13. A distance formed between the first glass plate 131 and the second glass plate 132 may be increased to form a large spacing between the camera 13 and the chamber 11. Thus, a great volume of the supplied air can be realized. The door body 15 may be provided with a plurality of first glass plates 131 disposed between the camera 13 and the chamber 11.

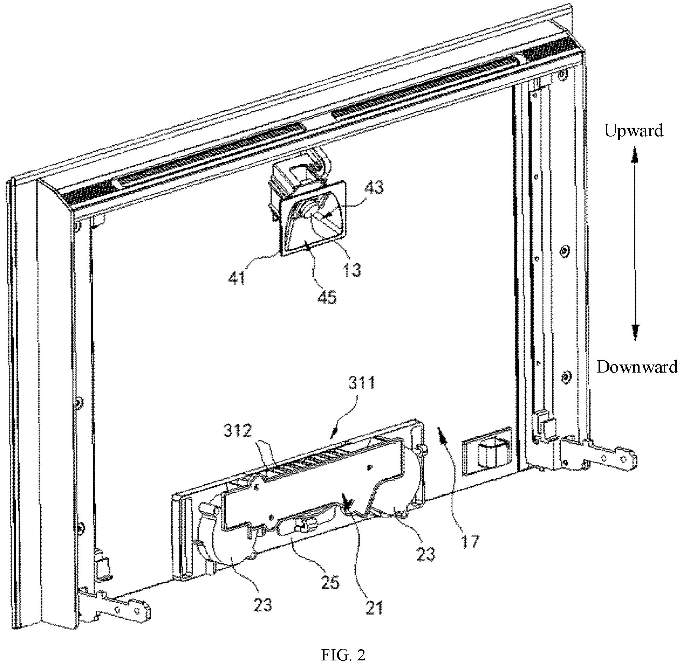

Referring to FIG. 2 and FIG. 3, in some embodiments, the heat dissipation device 21 is located at the lower part of the door body 15, and the camera 13 is located above the heat dissipation device 21. In this way, cold air and hot air in the first air duct 17 may be easily separated from each other to improve heat dissipation efficiency.

In some embodiments, the camera 13 is arranged at an upper part of the door body 15. Thus, the hot air can be easily and quickly discharged out of the first air duct 17. In addition, the heat dissipation device 21 is arranged at the lower part of the door body 15. Thus, the heat dissipation device 21 can suck the cold air. It can be understood that the hot air gradually flows to a top of the door body 15 due to thermal expansion. As a result, it is possible to ensure that the hot air cannot be sucked by the heat dissipation device 21 again, which would affect a heat dissipation effect.

Referring to FIG. 4, in the embodiments illustrated in FIG. 2 to FIG. 4, a first air outlet 133 is defined on the top of the door body 15 and in communication with the first air duct 17. As a result, hot air located on the upper part of the door body 15 can be discharged out of the first air duct 17 along the first air outlet 133. A first air inlet 134 is defined on the lower part of the door body 15 and in communication with the first air duct 17. As a result, cold air located outside the door body 15 can be sucked into the first air duct 17 along the first air inlet 134. In the embodiment illustrated in FIG. 3, the heat dissipation device 21 is disposed close to the first air inlet 134. In this way, cold air near the first air inlet 134 can be easily sucked into the heat dissipation device 21 by the heat dissipation device 21.

Referring to FIG. 2 and FIG. 3, and according to the invention, the heat dissipation device 21 comprises a first fan 23 and a first bracket 25. The first fan 23 is mounted on the door body 15 by means of the first bracket 25. The first bracket 25 comprises a first air duct member 31. The first air duct member 31 has an air outlet 311. An air outlet grid 312 is disposed at the air outlet 311. In this way, airflow for continuous heat dissipation can be provided for the camera 13.

In some embodiments, in the embodiment illustrated in FIG. 3, the first fan 23 has a first intake 231. An air outlet 311 faces upwards and is disposed on the first air duct member 31. The first fan 23 can suck the cold air outside the door body 15 through the first intake 231, and then deliver the cold air to the air outlet 311 along the first air duct member 31. Cold air at the air outlet 311 is delivered to the camera 13 along the air outlet grid 312 to achieve the heat dissipation effect. It can be understood that the cold air outside the door body 15 can be continuously sucked by the first fan 23, and thus a continuous heat dissipation can be provided to the camera 13.

Referring to FIG. 2 and FIG. 3, in some embodiments, the air outlet grid 312 is configured to direct an air supply direction of the heat dissipation device 21 towards the camera 13. In this way, the heat dissipation device 21 can directly dissipate heat for the camera 13 to improve the heat dissipation efficiency.

In some embodiments, in the embodiment illustrated in FIG. 3, when delivered to the air outlet 311 by the first fan 23, the cold air flows in a direction defined by the air outlet grid 312, which allows the air supply direction of the heat dissipation device 21 to direct towards the camera 13. Thus, it is possible to prevent the cold air from flowing in the door body 15 in other directions, which cannot provide directly dissipating heat for the camera 13. Therefore, the heat dissipation efficiency is improved. A number of the air outlet grids 312 may be adjusted as desired, or may be selected by testing, which is not limited herein.

Referring to FIG. 2, in some embodiments, a plurality of first fans 23 is provided and arranged in parallel along the lower part of the door body 15. In this way, when the cold air is sucked by the plurality of first fans 23, heat dissipation amounts for the camera 13 and the door body 15 can be improved, and a heat dissipation speed is increased.

In some embodiments, the plurality of first fans 23 may be or not be uniformly arranged at intervals on the lower part of the door body 15. The plurality of first fans 23 is in communication with the first air duct member 31 to allow the plurality of first fans 23 to simultaneously dissipate heat for the camera 13. In the illustrated embodiment, each of the plurality of first fans 23 is in communication with the first air duct member 31. It can be understood that a plurality of first air duct members 31 may also be provided. In other embodiments, each first air duct member 31 may be only in communication with one of the plurality of first fans 23, or may be in communication with at least two of the plurality of first fans 23. The number of the first fans 23 may be selected as desired, or calibrated through testing. The plurality of first fans 23 may have the same specification and model, or some or all of the plurality of first fans 23 may have different specifications and models. In one embodiment, the first fan 23 is a centrifugal fan, which is not limited herein. The term "a plurality of" herein may refer to two or more.

Referring to FIG. 2 and FIG. 3, according to the invention, two first fans 23 may be provided. The first air duct member 31 has a first ventilation passage 33, a second ventilation passage 35, and a connecting ventilation passage 37. The connecting ventilation passage 37 is in communication with the first ventilation passage 33, the second ventilation passage 35, and the air outlet 311. One of the two first fans 23 is in communication with the first ventilation passage 33, and the other one of the two first fans 23 is in communication with the second ventilation passage 35. The first ventilation passage 33 is obliquely connected to the connecting ventilation passage 37. The second ventilation passage 35 is horizontally connected to the connecting ventilation passage 37. In this way, the cold air may be intensively delivered to the air outlet 311, which can improve the heat dissipation efficiency.

In some embodiments, in the embodiment illustrated in FIG. 2 and FIG. 3, the first fan 23 has a first exhaust port 233. By delivering cold air discharged by two first exhaust ports 233 respectively located at two sides into the connecting ventilation passage 37, cold air of a large flow rate may flow in the connecting ventilation passage 37. In this case, the cold air may be intensively discharged to the camera 13 along the air outlet grid 312. Thus, it is possible to reduce loss during the delivering (for example, resistance during the delivering, and the cold air flowing in other directions), and ensure the heat dissipation efficiency of the camera 13.

In addition, in the embodiment illustrated in FIG. 2 and FIG. 3, the two first fans 23 have a same structure (or it can be understood that they have the same specification and model). Further, both the first fans rotate in a counterclockwise direction. In this case, the first ventilation passage 33 is obliquely connected to the connecting ventilation passage 37, and the second ventilation passage 35 is horizontally connected to the connecting ventilation passage 37. Therefore, both the first exhaust ports 233 are defined towards the connecting ventilation passage 37 and opposite to each other, and the first air duct member 31 may have a shorter length. As a result, the first air duct member 31 has a relatively short length, which in turn provides more compact structure for the heat dissipation device 21. Further, the cold air at the air outlet 311 can be quickly discharged along the air outlet grid 312. Thus, good heat dissipation efficiency can be provided.

Referring to FIG. 3, in some embodiments, a side wall of the connecting ventilation passage 37 away from the air outlet 311 has a shape recessed towards the air outlet grid 312. In this way, the cold air in the first air duct member 31 has a trend of flowing upwards, which further allows the cold air to be quickly discharged and improves delivering efficiency of the cold air.

In some embodiments, in the embodiment illustrated in FIG. 3, the side wall of the connecting ventilation passage 37 away from the air outlet 311 severs as a flow guide wall 39. The flow guide wall 39 is located at a bottom of the connecting ventilation passage 37 with respect to the air outlet 311, and is recessed into an arc shape in a extending direction of the connecting ventilation passage 37. In this way, flow resistance of the airflow can be reduced. It can be understood that since the flow guide wall 39 is recessed, the connecting ventilation passage 37 has a smaller cross-sectional area. In a case where the first fan 23 discharges the cold air, the cold air discharged out of the first ventilation passage 33 and the second ventilation passage 35 may flow to the air outlet 311 along the flow guide wall 39. As a result, instead of remaining in the connecting ventilation passage 37, the cold air flowing to the connecting ventilation passage 37 can be easily discharged along the air outlet 311.

Referring to FIG. 2 and FIG. 3, in some embodiments, the household appliance 100 comprises a second bracket 41. The camera 13 is mounted in the first air duct 17 by means of the second bracket 41. The second bracket 41 has an accommodation space 43. The camera 13 is located in the accommodation space 43. The accommodation space 43 has an opening 45 facing towards the heat dissipation device 21. In this way, centralized heat dissipation may be conveniently performed on the camera 13.

In some embodiments, in the embodiment illustrated in FIG. 2 and FIG. 3, in a case where the cold air is delivered to the camera 13, the cold air may be directly introduced into the accommodation space 43 along the opening 45 and diffuse around the camera 13 to dissipate heat for the camera 13. Referring again to FIG. 3, the second bracket 41 further has a plurality of exhaust holes 47 arranged at different positions on the second bracket 41 and facing upwards. Each of the plurality of exhaust holes 47 is in communication with the accommodation space 43. When formed in the accommodation space 43, the hot air may be discharged upwards through the plurality of exhaust holes 47 to ensure that the hot air is not left in the accommodation space 43 and can be simultaneously discharged through the plurality of exhaust holes 47. Therefore, it is possible to ensure that the air in the accommodation space 43 may flow from bottom to top. It can be understood that one exhaust hole 47 may be provided.

In addition, in other embodiments, the second bracket 41 is provided with a light blocking member (not shown). The light blocking member is disposed at a front of the camera 13 and configured to avoid accidentally capturing of an inverted image generated from the outside of the door body 15 when the camera 13 collects the image information. Thus, accuracy of the image information can be ensured.

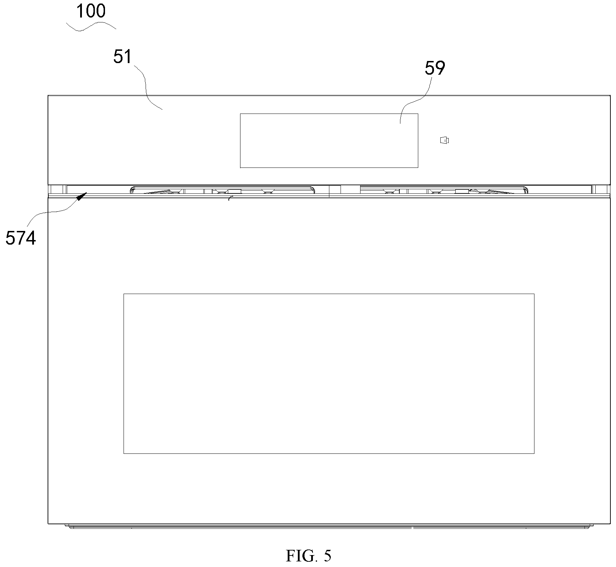

Referring to FIG. 5 to FIG. 7, in some embodiments, a control box 51 is fixed on a front part of the chamber 11. The control box 51 is located above the door body 15. The household appliance 100 comprises a second air duct member 53 arranged at the top of the chamber 11. A second fan 55 is disposed in the second air duct member 53. The second air duct member 53 has a second air duct 57. The second air duct 57 has an inlet 571 in communication with the first air duct 17, and an outlet 573 in communication with a gap 574 between the top of the door body 15 and the control box 51. In this way, the air in the first air duct 17 can be accelerated by the second air duct member 53 to flow from bottom to top. As a result, cooling effect can be improved.

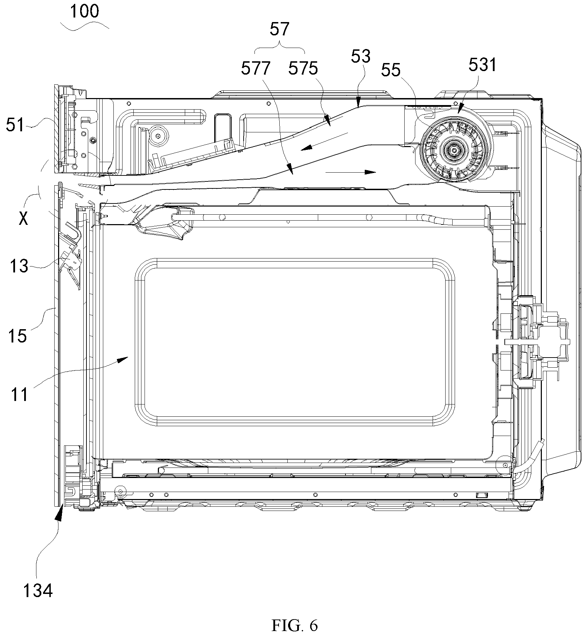

In the embodiment illustrated in FIG. 6, the second air duct 57 comprises an upper air duct 575 and a lower air duct 577 that are spaced apart from each other. The second air duct member 53 comprises a communication space 531 for communicating the upper air duct 575 with the lower air duct 577. The second fan 55 is located in the communication space 531. The lower air duct 577 is in communication with the first air outlet 133. The upper air duct 575 is in communication with the gap 574 between the top of the door body 15 and the control box 51.

In some embodiments, the inlet 571 faces towards the first air outlet 133 and is disposed close to the first air outlet 133. When the chamber 11 is closed by the door body 15, the inlet 571 of the second air duct 57 is communication with the first air duct 17, and the second fan 55 continuously sucks the air at the inlet 571 to allow the air in the first air duct 17 to be discharged through the first air outlet 133 and sucked into the lower air duct 577. Hot air in the lower air duct 577 is continuously sucked by the second fan 55, then is discharged into the upper air duct 575, and is finally discharged out of the household appliance 100 through the gap 574 at the outlet 573 of the second air duct 57. As a result, the accelerated airflow from bottom to top can be finally formed in the first air duct 17.

In addition, in the embodiment illustrated in FIG. 5 to FIG. 7, the second air duct member 53 can effectively reduce a temperature of the household appliance 100 and take away heat to allow an environment temperature of other components of the household appliance 100 to be at a suitable temperature. Thus, it is possible to improve service life as well as stability and safety of the household appliance 100 during its operation.

In addition, in the embodiment illustrated in FIG. 5, the control box 51 has a touch screen 59. The household appliance 100 is controllable through manipulating the touch screen 59 by the user, such as parameter setting, mode setting, startup and shutdown. It can be understood that in other embodiments, the control box 51 may be provided with a button, a knob, or the like to achieve the same effect, and the description thereof in detail will be omitted herein.

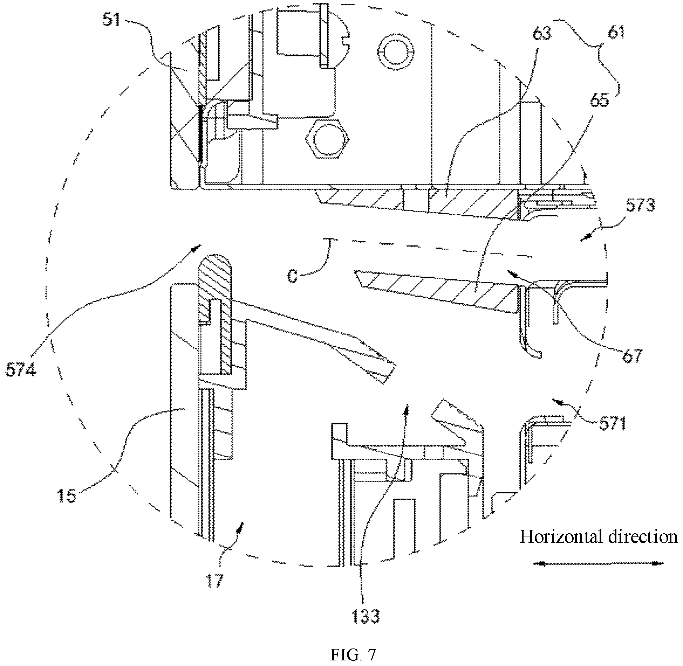

Referring to FIG. 7, in some embodiments, the household appliance 100 comprises a deflector 61 corresponding to the outlet 573 of the second air duct 57. The deflector 61 is mounted at a bottom of the control box 51. In this way, it is possible to prevent the hot air discharged through the outlet 573 from being sucked into the second air duct 57 again.

In some embodiments, in the embodiment illustrated in FIG. 7, the deflector 61 comprises a first deflecting member 63 and a second deflecting member 65. The first deflecting member 63 and the second deflecting member 65 are spaced apart from each other at the outlet 573 to form an air outlet channel 67. The air outlet channel 67 has a central axis C inclined upwards from a horizontal direction at a predetermined angle. In this way, the air outlet channel 67 tends to extend upwards from the outlet 573 to the gap 574. In this case, hot air at the air outlet channel 67 is discharged through the gap 574 in a direction away from the inlet 571, and thus is not easily sucked into the second air duct 57, which would affect a speed of the air in the first air duct 17 when flowing upwards.

## Claims

1. A household appliance (100), comprising:
a chamber (11);
a camera (13);
a door body (15) movably connected to a front part of the chamber (11), a first air duct (17) being defined in the door body (15), and the camera (13) being located in the first air duct (17); and
a heat dissipation device (21) mounted in the door body (15) and supplying air into the first air duct (17) to dissipate heat for the door body (15) and the camera (13), wherein the heat dissipation device (21) comprises:
a first bracket (25) comprising a first air duct member (31), an air outlet (311) being defined in the first air duct member (31), an air outlet grid (312) being disposed at the air outlet (311); and
a first fan (23) being mounted on the door body (15) by means of the first bracket (25),
**characterized in that**
two first fans (23) are provided;
the first air duct member (31) has a first ventilation passage (33), a second ventilation passage (35), and a connecting ventilation passage (37), the connecting ventilation passage (37) being in communication with the first ventilation passage (33), the second ventilation passage (35), and the air outlet (311);
one of the two first fans (23) is in communication with the first ventilation passage (33), and another one of the two first fans (23) is in communication with the second ventilation passage (35); and
the first ventilation passage (33) is obliquely communicated with the connecting ventilation passage (37), and the second ventilation passage (35) is horizontally communicated with the connecting ventilation passage (37).

2. The household appliance (100) according to claim 1, wherein:
the heat dissipation device (21) is located at a lower part of the door body (15); and
the camera (13) is located above the heat dissipation device (21).

3. The household appliance (100) according to claim 1, wherein a first glass plate (131) is disposed on an inner side of the door body (15), the first glass plate (131) isolating the camera (13) in the first air duct (17) from the air in the chamber (11) when the chamber (11) is closed by the door body (15).

4. The household appliance (100) according to claim 3, wherein:
a second glass plate (132) is disposed on an outer side of the door body (15); and
the first glass plate (131) and the second glass plate (132) are spaced apart from each other on the door body (15) to form the first air duct (17).

5. The household appliance (100) according to claim 1, wherein the air outlet grid (312) directs an air supply direction of the heat dissipation device (21) towards the camera (13); and/or wherein the two first fans (23) are arranged in parallel along a lower part of the door body (15);and/or wherein the two first fans (23) comprises a centrifugal fan.

6. The household appliance (100) according to claim 1, wherein a side wall of the connecting ventilation passage (37) away from the air outlet (311) is formed as a flow guide wall (39); and/or wherein a side wall of the connecting ventilation passage (37) away from the air outlet (311) has a shape recessed towards the air outlet grid (312).

7. The household appliance (100) according to claim 1, further comprising a second bracket (41), wherein:
the camera (13) is mounted in the first air duct (17) by means of the second bracket (41); and
the second bracket (41) has an accommodation space (43), the camera (13) being located in the accommodation space (43), and the accommodation space (43) having an opening (45) facing towards the heat dissipation device (21).

8. The household appliance (100) according to claim 7, wherein the second bracket (41) has a light blocking member disposed at a front part of the camera (13); and/or wherein the second bracket (41) has a plurality of exhaust holes (47) arranged upwards at different positions on the second bracket (41), each of the plurality of exhaust holes (47) being in communication with the accommodation space (43).

9. The household appliance (100) according to claim 1, wherein:
a control box (51) is fixed to the front part of the chamber (11) and located above the door body (15); and
the household appliance (100) further comprises a second air duct member (53) disposed at a top of the chamber (11), wherein a second fan (55) being disposed in the second air duct member (53), and wherein the second air duct member (53) having a second air duct (57), the second air duct (57) having an inlet (571) in communication with the first air duct (17) and an outlet (573) in communication with a gap (574) between the top of the door body (15) and the control box (51).

10. The household appliance (100) according to claim 9, wherein the control box (51) has a touch screen (59), an operation of the household appliance (100) being controllable through manipulating the touch screen (59).

11. The household appliance (100) according to claim 10, further comprising a deflector (61) corresponding to the outlet of the second air duct (57), the deflector (61) being mounted at a bottom of the control box (51).

12. The household appliance (100) according to claim 11, wherein the deflector (61) comprises a first deflecting member (63) and a second deflecting member (65), the first deflecting member (63) and the second deflecting member (65) being spaced apart from each other at the outlet (573) of the second air duct (57) to form an air outlet channel (67); wherein the air outlet channel (67) preferably has a central axis inclined upwards from a horizontal direction by a predetermined angle.

13. The household appliance (100) according to claim 1, comprising an oven.

## Patentansprüche

1. Haushaltsgerät (100), umfassend:
eine Kammer (11);
eine Kamera (13);
einen Türkörper (15), der beweglich mit einem vorderen Teil der Kammer (11) verbunden ist, wobei ein erster Luftkanal (17) in dem Türkörper (15) definiert ist und sich die Kamera (13) in dem ersten Luftkanal (17) befindet; und
eine Wärmeableitungsvorrichtung (21), die in dem Türkörper (15) montiert ist und Luft in den ersten Luftkanal (17) zuführt, um Wärme für den Türkörper (15) und die Kamera (13) abzuleiten, wobei die Wärmeableitungsvorrichtung (21) Folgendes umfasst:
eine erste Halterung (25) umfassend ein erstes Luftkanalelement (31), wobei ein Luftauslass (311) in dem ersten Luftkanalelement (31) definiert ist, wobei sich ein Luftauslassgitter (312) an dem Luftauslass (311) befindet; und
ein erster Ventilator (23), der mit Hilfe der ersten Halterung (25) am Türkörper (15) montiert ist,
**dadurch gekennzeichnet, dass**
zwei erste Ventilatoren (23) vorgesehen sind;
das erste Luftkanalelement (31) einen ersten Belüftungsdurchgang (33), einen zweiten Belüftungsdurchgang (35) und einen Verbindungsbelüftungsdurchgang (37) aufweist, wobei der Verbindungsbelüftungsdurchgang (37) in Verbindung mit dem ersten Belüftungsdurchgang (33), dem zweiten Belüftungsdurchgang (35) und dem Luftauslass (311) steht;
einer der zwei ersten Ventilatoren (23) mit dem ersten Belüftungsdurchgang (33) in Verbindung steht und ein anderer der zwei ersten Ventilatoren (23) mit dem zweiten Belüftungsdurchgang (35) in Verbindung steht; und
der erste Belüftungsdurchgang (33) schräg mit dem Verbindungsbelüftungsdurchgang (37) in Verbindung steht, und der zweite Belüftungsdurchgang (35) horizontal mit dem Verbindungsbelüftungsdurchgang (37) in Verbindung steht.

2. Haushaltsgerät (100) gemäß Anspruch 1, wobei:
sich die Wärmeableitungsvorrichtung (21) an einem unteren Teil des Türkörpers (15) befindet; und
sich die Kamera (13) oberhalb der Wärmeableitungsvorrichtung (21) befindet.

3. Haushaltsgerät (100) gemäß Anspruch 1, wobei sich eine erste Glasplatte (131) an einer Innenseite des Türkörpers (15) befindet, wobei die erste Glasplatte (131) die Kamera (13) in dem ersten Luftkanal (17) von der Luft in der Kammer (11) isoliert, wenn die Kammer (11) durch den Türkörper (15) geschlossen ist.

4. Haushaltsgerät (100) gemäß Anspruch 3, wobei:
sich eine zweite Glasplatte (132) an einer Außenseite des Türkörpers (15) befindet; und
die erste Glasplatte (131) und die zweite Glasplatte (132) auf dem Türkörper (15) voneinander beabstandet sind, um den ersten Luftkanal (17) auszubilden.

5. Haushaltsgerät (100) gemäß Anspruch 1, wobei das Luftauslassgitter (312) eine Luftzufuhrrichtung der Wärmeableitungsvorrichtung (21) in Richtung der Kamera (13) lenkt; und/oder wobei die zwei ersten Ventilatoren (23) parallel entlang eines unteren Teils des Türkörpers (15) angeordnet sind; und/oder wobei die zwei ersten Ventilatoren (23) einen Zentrifugalventilator umfassen.

6. Haushaltsgerät (100) gemäß Anspruch 1, wobei eine dem Luftauslass (311) abgewandte Seitenwand des Verbindungsbelüftungsdurchgangs (37) als Strömungsleitwand (39) ausgebildet ist; und/oder wobei eine dem Luftauslass (311) abgewandte Seitenwand des Verbindungsbelüftungsdurchgangs (37) eine zum Luftauslassgitter (312) hin vertiefte Form aufweist.

7. Haushaltsgerät (100) gemäß Anspruch 1, ferner umfassend eine zweite Halterung (41), wobei:
die Kamera (13) mittels der zweiten Halterung (41) in dem ersten Luftkanal (17) montiert ist; und
die zweite Halterung (41) einen Aufnahmeraum (43) aufweist, wobei sich die Kamera (13) in dem Aufnahmeraum (43) befindet und der Aufnahmeraum (43) eine Öffnung (45) aufweist, die der Wärmeableitungsvorrichtung (21) zugewandt ist.

8. Haushaltsgerät (100) gemäß Anspruch 7, wobei die zweite Halterung (41) ein lichtblockierendes Element aufweist, das sich an einem vorderen Teil der Kamera (13) befindet; und/oder wobei die zweite Halterung (41) eine Vielzahl von Abluftlöchern (47) aufweist, die aufwärts an verschiedenen Positionen an der zweiten Halterung (41) angeordnet sind, wobei jedes der Vielzahl von Abluftlöchern (47) in Verbindung mit dem Aufnahmeraum (43) steht.

9. Haushaltsgerät (100) gemäß Anspruch 1, wobei:
ein Steuerkasten (51) am vorderen Teil der Kammer (11) befestigt und oberhalb des Türkörpers (15) angeordnet ist; und
das Haushaltsgerät (100) ferner ein zweites Luftkanalelement (53) umfasst, das sich an einer Oberseite der Kammer (11) befindet, wobei sich ein zweiter Ventilator (55) in dem zweiten Luftkanalelement (53) befindet, und wobei das zweite Luftkanalelement (53) einen zweiten Luftkanal (57) aufweist, wobei der zweite Luftkanal (57) einen Einlass (571) in Verbindung mit dem ersten Luftkanal (17) und einen Auslass (573) in Verbindung mit einem Spalt (574) zwischen der Oberseite des Türkörpers (15) und dem Steuerkasten (51) aufweist.

10. Haushaltsgerät (100) gemäß Anspruch 9, wobei der Steuerkasten (51) einen Touchscreen (59) aufweist, wobei ein Betrieb des Haushaltsgeräts (100) durch Betätigen des Touchscreens (59) steuerbar ist.

11. Haushaltsgerät (100) gemäß Anspruch 10, ferner umfassend einen Deflektor (61), der mit dem Auslass des zweiten Luftkanals (57) in Verbindung steht, wobei der Deflektor (61) an einem Boden des Steuerkastens (51) montiert ist.

12. Haushaltsgerät (100) gemäß Anspruch 11, wobei der Deflektor (61) ein erstes Ablenkelement (63) und ein zweites Ablenkelement (65) umfasst, wobei das erste Ablenkelement (63) und das zweite Ablenkelement (65) am Auslass (573) des zweiten Luftkanals (57) voneinander beabstandet sind, um einen Luftauslasskanal (67) auszubilden; wobei der Luftauslasskanal (67) vorzugsweise eine Mittelachse aufweist, die von einer horizontalen Richtung um einen vorbestimmten Winkel nach oben geneigt ist.

13. Haushaltsgerät (100) gemäß Anspruch 1, umfassend einen Ofen.

## Revendications

1. Un appareil ménager (100), comprenant :
une chambre (11) ;
une caméra (13) ;
un corps de porte (15) relié de manière mobile à une partie avant de la chambre (11), un premier conduit d'air (17) étant défini dans le corps de porte (15), et la caméra (13) étant située dans le premier conduit d'air (17) ; et
un dispositif de dissipation thermique (21) monté dans le corps de porte (15) et fournissant de l'air dans le premier conduit d'air (17) pour dissiper de la chaleur du corps de porte (15) et de la caméra (13), dans lequel le dispositif de dissipation thermique (21) comprend :
un premier support (25) comprenant un premier élément de conduit d'air (31), une sortie d'air (311) étant définie dans le premier élément de conduit d'air (31), une grille de sortie d'air (312) étant disposée au niveau de la sortie d'air (311) ; et
un premier ventilateur (23) monté sur le corps de porte (15) au moyen du premier support (25),
**caractérisé par le fait que**
deux premiers ventilateurs (23) sont prévus ;
le premier élément de conduit d'air (31) comporte un premier passage de ventilation (33), un second passage de ventilation (35) et un passage de ventilation de liaison (37), le passage de ventilation de liaison (37) étant en communication avec le premier passage de ventilation (33), le second passage de ventilation (35) et la sortie d'air (311) ;
un des deux premiers ventilateurs (23) est en communication avec le premier passage de ventilation (33), et un autre des deux premiers ventilateurs (23) est en communication avec le second passage de ventilation (35) ; et
le premier passage de ventilation (33) est en communication oblique avec le passage de ventilation de liaison (37), et le second passage de ventilation (35) est en communication horizontale avec le passage de ventilation de liaison (37).

2. L'appareil ménager (100) selon la revendication 1, dans lequel :
le dispositif de dissipation de la chaleur (21) est situé dans la partie inférieure du corps de porte (15) ; et
la caméra (13) est située au-dessus du dispositif de dissipation de la chaleur (21).

3. L'appareil ménager (100) selon la revendication 1, dans lequel une première plaque de verre (131) est disposée sur un côté intérieur du corps de porte (15), la première plaque de verre (131) isolant la caméra (13) dans le premier conduit d'air (17) de l'air dans la chambre (11) lorsque la chambre (11) est fermée par le corps de porte (15).

4. L'appareil ménager (100) selon la revendication 3, dans lequel :
une deuxième plaque de verre (132) est disposée sur un côté extérieur du corps de porte (15) ; et
la première plaque de verre (131) et la seconde plaque de verre (132) sont espacées l'une de l'autre sur le corps de porte (15) pour former le premier conduit d'air (17).

5. L'appareil ménager (100) selon la revendication 1, dans lequel la grille de sortie d'air (312) dirige une direction d'alimentation en air du dispositif de dissipation thermique (21) vers la caméra (13) ; et/ou dans lequel les deux premiers ventilateurs (23) sont disposés en parallèle le long d'une partie inférieure du corps de porte (15); et/ou dans lequel les deux premiers ventilateurs (23) comprennent un ventilateur centrifuge.

6. L'appareil ménager (100) selon la revendication 1, dans lequel une paroi latérale du passage de ventilation de liaison (37) éloignée de la sortie d'air (311) est formée comme une paroi de guidage du flux (39) ; et/ou dans lequel une paroi latérale du passage de ventilation de liaison (37) éloignée de la sortie d'air (311) a une forme évidée vers la grille de sortie d'air (312).

7. L'appareil ménager (100) selon la revendication 1, comprenant en outre un second support (41), dans lequel :
la caméra (13) est montée dans le premier conduit d'air (17) au moyen du second support (41) ; et
le second support (41) comporte un espace de logement (43), la caméra (13) étant située dans l'espace de logement (43), et l'espace de logement (43) comportant une ouverture (45) orientée vers le dispositif de dissipation de la chaleur (21).

8. L'appareil ménager (100) selon la revendication 7, dans lequel le second support (41) comporte un élément de blocage de la lumière disposé sur une partie avant de la caméra (13) ; et/ou dans lequel le second support (41) comporte une pluralité de trous d'échappement (47) disposés vers le haut à différentes positions sur le second support (41), chacun des trous d'échappement (47) étant en communication avec l'espace de logement (43).

9. L'appareil ménager (100) selon la revendication 1, dans lequel :
un boîtier de commande (51) est fixé à la partie avant de la chambre (11) et situé au-dessus du corps de porte (15) ; et
l'appareil ménager (100) comprend en outre un deuxième élément de conduit d'air (53) disposé à un sommet de la chambre (11), un deuxième ventilateur (55) étant disposé dans le deuxième élément de conduit d'air (53), et le deuxième élément de conduit d'air (53) ayant un deuxième conduit d'air (57), le deuxième conduit d'air (57) ayant une entrée (571) en communication avec le premier conduit d'air (17) et une sortie (573) en communication avec un espace (574) entre le sommet du corps de porte (15) et le boîtier de commande (51).

10. L'appareil ménager (100) selon la revendication 9, dans lequel le boîtier de commande (51) comporte un écran tactile (59), un fonctionnement de l'appareil ménager (100) pouvant être contrôlé par la manipulation de l'écran tactile (59).

11. L'appareil ménager (100) selon la revendication 10, comprenant en outre un déflecteur (61) correspondant à la sortie du second conduit d'air (57), le déflecteur (61) étant monté sur un fond du boîtier de commande (51).

12. L'appareil ménager (100) selon la revendication 11, dans lequel le déflecteur (61) comprend un premier élément déflecteur (63) et un second élément déflecteur (65), le premier élément déflecteur (63) et le second élément déflecteur (65) étant espacés l'un de l'autre à la sortie (573) du second conduit d'air (57) pour former un canal de sortie d'air (67) ; dans lequel le canal de sortie d'air (67) a de préférence un axe central incliné vers le haut par rapport à une direction horizontale d'un angle prédéterminé.

13. L'appareil ménager (100) selon la revendication 1, comprenant un four.
